# EUROPÄISCHE PATENTSCHRIFT

(11) **EP 4 658 545 B1**
(45) Veröffentlichungstag und Bekanntmachung des Hinweises auf die Patenterteilung: **23.09.2026**
(21) Anmeldenummer: 24707436.2
(22) Anmeldetag: 07.02.2024
(51) Int. Cl.: B61L 15/00, H04L 12/40

(54) **VERFAHREN ZUR EINSTELLUNG EINER KOMMUNIKATION ZWISCHEN FAHRZEUGEN EINES ZUGES**
METHOD FOR SETTING COMMUNICATION BETWEEN VEHICLES OF A TRAIN
PROCÉDÉ POUR ÉTABLIR UNE COMMUNICATION ENTRE DES VÉHICULES D'UN TRAIN

(30) Priorität: 09.03.2023 DE 102023202113
(43) Veröffentlichungstag der Anmeldung: 10.12.2025
(73) Patentinhaber: Siemens Mobility GmbH, 80997 München (DE)
(72) Erfinder: GOKUS, Armin, 91301 Forchheim (DE); BAUER, Markus, 91224 Pommelsbrunn (DE)
(74) Vertreter: Siemens Patent Attorneys
(86) Internationale Anmeldenummer: PCT/EP2024/052989
(87) Internationale Veröffentlichungsnummer: WO 2024/184000

(56) Entgegenhaltungen:
- KONECNY: "Mezivozová komunikace ve vozidlech CD", 29 July 2015 (2015-07-29), XP093161029, Retrieved from the Internet <URL:https://www.sizi.cz/file.php?nid=14068&oid=4665991>
- ANONYMOUS: "Zeleznicár | Vlaková datová linka aneb jak funguje WTB v ceských podmínkách", 19 June 2014 (2014-06-19), XP093161005, Retrieved from the Internet <URL:https://zeleznicar.cd.cz/zeleznicar/provoz-a-technika/vlakova-datova-linka-aneb-jak-funguje-wtb-v-ceskych-podminkach/-4774/21,0,,/>
- ANONYMOUS: "WTB komunikace a nové rídicí vozy CD", 28 August 2023 (2023-08-28), XP093161008, Retrieved from the Internet <URL:https://www.spz.logout.cz/vozidla/961/961_wtb.html>
- DOPRAVNÍ FAKULTA: "Sborník anotací z workshopu CESKÉ VYSOKÉ UCENÍ TECHNICKÉ V PRAZE", 31 December 2015 (2015-12-31), XP093161015, Retrieved from the Internet <URL:https://www.sizi.cz/file.php?nid=14068&oid=4665985>

## Beschreibung

Die Erfindung betrifft ein Verfahren zur Einstellung einer Kommunikation zwischen Fahrzeugen eines Zuges.

In einem Zug mit mehreren Schienenfahrzeugen wird unterschieden zwischen einem führenden Fahrzeug und einem geführten Fahrzeug.

Die Fahrzeuge des Zuges verwenden zugintern und zur Kommunikation untereinander ein gemeinsames, Bus-basiertes Kommunikationssystem, das im Folgenden als "Wire Train Bus, WTB" bezeichnet und beispielsweise im Rahmen einer Fernsteuerung verwendet wird.

Details zu einer bekannten WTB-Kommunikation sind beispielsweise beschrieben bzw. definiert im "International Standard IEC 61375-1, First Edition 1999-09, Electric Railway Equipment, Train Bus, Part 1: Train Communication Network".

Es sind Bus-basierte WTB-Kommunikationssysteme mit betreiberunabhängigen und mit betreiberspezifischen Implementierungen bekannt.

Eine betreiberunabhängige Implementierung ist unter der Abkürzung WTB-UIC bekannt. Die Implementierung WTB-UIC wurde zur Sicherstellung einer Interoperabilität einzelner Fahrzeuge vom "Internationalen Eisenbahnverband, UIC" in Verbindung mit der "Internationalen Elektrotechnischen Kommission, IEC" entwickelt.

Eine erste betreiberspezifische Implementierung ist unter der Abkürzung "WTB-ÖBB" bekannt. Die Implementierung WTB-ÖBB wurde im Wesentlichen unter Federführung der "Österreichischen Bundesbahn, ÖBB" entwickelt.

Eine zweite betreiberspezifische Implementierung ist unter der Abkürzung "WTB-CD" bekannt. Die Implementierung WTB-CD wurde im Wesentlichen unter Federführung der "Tschechischen Staatsbahn" bzw. der "České drähy, ČD" entwickelt.

Die WTB-Implementierungen werden europaweit zur zuginternen Kommunikation eingesetzt, wobei sogenannte R-Telegramme verwendet werden.

R-Telegramme werden als regelmäßige Telegramme zwischen den Fahrzeugen des Zuges gesendet. Man unterscheidet dabei zwischen
- R1-Telegrammen, die vom führenden Fahrzeug zu den geführten Fahrzeugen übertragen werden,
- R2-Telegrammen, die von den geführten Fahrzeugen zum führenden Fahrzeug übertragen werden, und
- R3-Telegrammen, die zwischen einzelnen Fahrzeugen des Zuges übertragen werden.

Allgemeine Informationen sowie Details zum Aufbau der R-Telegramme sind beispielsweise beschrieben bzw. definiert im "UIC-Kodex 556, 5.Ausgabe, August 2009, Informationsübertragung im Zug (Zugbus)" sowie in deren Anlagen, vgl. hierzu beispielsweise "UIC, Anlage B - Aufbau der R-Telegramme, B1 - Aufbau des R1-Telegramms (Version 002.03, gültig ab 01.03.2009), 556 VE".

Die beiden Implementierungen WTB-ÖBB und WTB-CD sind untereinander nicht kompatibel, wodurch eine Zugzusammenstellung von Fahrzeugen mit unterschiedlichen Implementierungen erschwert bzw. verhindert wird.

Die Auswahl der konkreten Implementierung zur Verwendung im Zug erfolgt beispielsweise durch das führende Fahrzeug des Zuges.

Verfügen Fahrzeuge des Zuges über eine Möglichkeit, um zwischen den beiden Implementierungen WTB-ÖBB und WTB-CD auszuwählen, so kann diese Auswahl mit Hilfe eines manuellen Umschalters in den betroffenen Fahrzeugen eingestellt werden.

Eine manuelle Umschaltung bzw. Einstellung wäre jedoch fehleranfällig und nur aufwendig durchführbar.

Es ist daher die Aufgabe der vorliegenden Erfindung, eine verbesserte Einstellung einer Kommunikation zwischen Fahrzeugen eines Zuges anzugeben.

Diese Aufgabe wird durch die Merkmale des Patentanspruchs 1 gelöst. Vorteilhafte Weiterbildungen sind in den abhängigen Patentansprüchen angegeben.

Die Erfindung betrifft ein Verfahren zur Einstellung einer Kommunikation zwischen einem führenden Fahrzeug und einem geführten Fahrzeug eines Zuges.

Die Fahrzeuge verwenden ein Bus-basiertes Kommunikationssystem, um zugintern miteinander zu kommunizieren.

Das führende Fahrzeug stellt eine erste Implementierung des Kommunikationssystems zur Ausführung zur Verfügung.

Das geführte Fahrzeug stellt zwei Implementierungen des Kommunikationssystems zur Ausführung zur Verfügung, nämlich die erste Implementierung und eine zweite Implementierung.

Über das führende Fahrzeug erfolgt eine Auswahl bzw. Festlegung der Implementierung, die für die Kommunikation zwischen den Fahrzeugen beim Betrieb des Zuges verwendet werden soll.

Das führende Fahrzeug legt die erste Implementierung des Kommunikationssystems für die Fahrzeuge des Zuges fest bzw. wählt diese aus.

Das führende Fahrzeug verwendet für die ausgewählte Implementierung eine Kennung, die fahrzeugübergreifend die ausgewählte Implementierung repräsentiert.

Das führende Fahrzeug überträgt die Kennung über das Bus-basierte Kommunikationssystem zum geführten Fahrzeug.

Zur Übertragung der Kennung wird eine vordefinierte Stelle eines vordefinierten Telegramms verwendet, wobei die Stelle im Telegramm Bestandteil der ersten Implementierung und der zweiten Implementierung ist, so dass die Kennung als deren Inhalt von beiden Implementierungen verwendbar ist.

Das geführte Fahrzeug empfängt die Kennung, konfiguriert sich basierend darauf selbsttätig auf die ausgewählte Implementierung und verwendet diese Implementierung nachfolgend für die Zug-interne Kommunikation.

Die Kennung bestimmt und signalisiert dem geführten Fahrzeug eindeutig, ob im Zug die erste oder die zweite Implementierung verwendet wird.

Durch dieses Vorgehen wird ermöglicht, dass das geführte

Fahrzeug die Kennung auch dann detektieren und umsetzen kann, wenn das führende Fahrzeug die erste Implementierung zur Kommunikation verwendet bzw. benutzt, während am geführten Fahrzeug die Benutzung der zweiten Implementierung zur Kommunikation eingestellt ist.

In der Erfindung wird als erste Implementierung die WTB-CD Implementierung und als zweite Implementierung die WTB-ÖBB Implementierung verwendet.

In einer bevorzugten Weiterbildung wird ein Telegramm, insbesondere ein R1-Telegramm, zur Übertragung der Kennung verwendet, wobei das Telegramm für eine unidirektionale Übertragung vom führenden Fahrzeug zum geführten Fahrzeug verwendet wird.

In einer bevorzugten Weiterbildung wird die Kennung im sogenannten Oktett 91 des R1-Telegramms übertragen, das als "Kennung für die Implementierung" bezeichnet ist.

In einer bevorzugten Weiterbildung wird als Kennung eine Betreiberkennung bzw. ein UIC-Ländercode verwendet - beispielsweise bzw. bevorzugt "54" für WTB-CD und "81" für WTB-ÖBB.

In einer bevorzugten Weiterbildung sind die Stelle und das Telegramm entsprechend den für nationale Erfordernisse vorbehaltenen Kapiteln der vorstehend genannten IEC- bzw. UIC-Definitionen ausgestaltet.

Durch die vorliegende Erfindung wird eine erleichterte Zusammenstellung von Fahrzeugen, die für die Verwendung von zwei WTB-Implementierungen ausgestattet sind, zu einem Zug ermöglicht.

Die vorliegende Erfindung ermöglicht eine sichere Umschaltung zwischen den beiden unterschiedlichen Implementierungen, wobei die Umschaltung über das führende Fahrzeug initiiert wird und seitens des geführten Fahrzeugs ferngesteuert und automatisiert ungesetzt wird.

Die vorliegende Erfindung ermöglicht eine vereinfachte gemischte Einreihung von Fahrzeugen mit WTB-CD und WTB-ÖBB-Implementierung.

Die vorliegende Erfindung ist auf Applikationsebene sehr einfach realisierbar, da sie ausschließlich bereits vorhandene oder leicht nachzurüstende Funktionen nutzt.

Nachfolgend wird die Erfindung mit Hilfe einer Zeichnung näher erläutert.

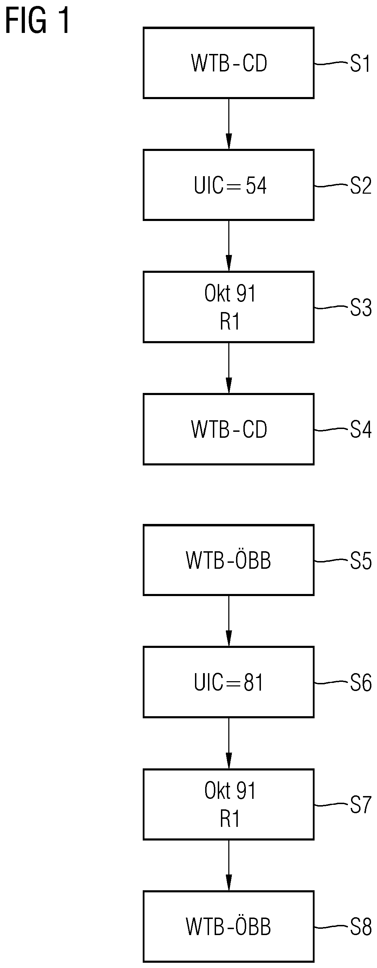

Dabei zeigt die einzige Figur FIG 1 eine Ausgestaltung der Erfindung in einem Ablaufdiagramm.

In einem ersten Schritt S1 wird für ein Fahrzeug, das in einem ersten Land als führendes Fahrzeug eines Zuges vorgesehen ist, eine sogenannte UIC-Taufe vorgenommen.

Dabei wird für das führende Fahrzeug als erste Implementierung WTB-CD festgelegt und am führenden Fahrzeug dessen Verwendung eingestellt.

In einem zweiten Schritt S2 wird eine als "Kennung für die Implementierung" bezeichnete Kennung mit einem Wert von "54" belegt.

In einem dritten Schritt S3 wird die mit dem Wert "54" belegte "Kennung für die Implementierung" durch ein vorbestimmtes Oktett Okt eines R1-Telegramms vom führenden Fahrzeug des Zuges an ein geführtes Fahrzeug des Zuges übertragen.

Das zur Übertragung verwendete Oktett Okt wird derart bestimmt, dass das Oktett Okt sowohl in WTB-CD als auch in WTB-ÖBB vorhanden und Bestandteil des jeweiligen R1-Telegramms ist.

Hier wird beispielhaft das Oktett 91 des R1-Telegramms als Oktett OKT dazu verwendet, das sowohl für die WTB-CD als auch für WTB-ÖBB verfügbar ist.

In einem vierten Schritt S4 empfängt das geführte Fahrzeug diese Kennung und konfiguriert sich selbsttätig auf WTB-CD.

In einem fünften Schritt S5 wird für das führende Fahrzeug eine andere WTB-Implementierung festgelegt, beispielsweise WTB-ÖBB.

In einem sechsten Schritt S6 wird die "Kennung für die Implementierung" mit einem Wert "81" belegt.

In einem siebten Schritt S7 wird die "Kennung für die Implementierung" durch das vorbestimmte Oktett 91 des R1-Telegramms als Oktett OKT vom führenden Fahrzeug des Zuges an das geführte Fahrzeug des Zuges übertragen.

In einem achten Schritt S8 empfängt das geführte Fahrzeug diese Kennung und konfiguriert sich selbsttätig auf WTB-ÖBB.

## Patentansprüche

1. Verfahren zur Einstellung einer Kommunikation zwischen einem führenden Fahrzeug und einem geführten Fahrzeug eines Zuges,
- bei dem die Fahrzeuge ein Bus-basiertes Kommunikationssystem (WTB) verwenden, um zugintern miteinander zu kommunizieren,
- bei dem das führende Fahrzeug eine erste Implementierung (WTB-CD) des Kommunikationssystems zur Ausführung zur Verfügung stellt,
- bei dem das geführte Fahrzeug neben der ersten Implementierung (WTB-CD) eine zweite Implementierung (WTB-ÖBB) des Kommunikationssystems zur Ausführung zur Verfügung stellt,
- bei dem über das führende Fahrzeug eine Auswahl von einer der beiden Implementierungen (WTB-CD, WTB-ÖBB) erfolgt, die für die Kommunikation beim Betrieb des Zuges verwendet werden soll,
- bei dem das führende Fahrzeug für die ausgewählte Implementierung (WTB-CD) eine Kennung verwendet, die die ausgewählte Implementierung (WTB-CD) repräsentiert,
- bei dem das führende Fahrzeug die Kennung über das Bus-basierte Kommunikationssystem (WTB) zum geführten Fahrzeug überträgt,
- bei dem zur Übertragung der Kennung eine vordefinierte Stelle (OKT 91) eines vordefinierten Telegramms (R1) verwendet wird, wobei die Stelle (OKT 91) im Telegramm (R1) Bestandteil der ersten Implementierung (WTB-CD) und der zweiten Implementierung (WTB-ÖBB) ist,
- bei dem das geführte Fahrzeug die Kennung empfängt, sich basierend darauf selbsttätig auf die ausgewählte Implementierung (WTB-CD) konfiguriert und diese Implementierung nachfolgend für die Zug-interne Kommunikation verwendet,
- bei dem als erste Implementierung die WTB-CD Implementierung und als zweite Implementierung die WTB-ÖBB Implementierung verwendet wird, wobei diese beiden Implementierungen (WTB-CD, WTB-ÖBB) untereinander nicht kompatibel sind.

2. Verfahren nach Anspruch 1, bei dem als Telegramm ein Telegramm verwendet wird, das für eine unidirektionale Übertragung vom führenden Fahrzeug zum geführten Fahrzeug vorgesehen ist.

3. Verfahren nach Anspruch 2, bei dem die Kennung im Oktett 91 eines R1-Telegramms der WTB-ÖBB Implementierung bzw. der WTB-CD Implementierung übertragen wird.

4. Verfahren nach einem der vorhergehenden Ansprüche, bei dem als Kennung eine Betreiberkennung verwendet wird, insbesondere ein Wert von 54 für WTB-CD und ein Wert von 81 für WTB-ÖBB.

## Claims

1. Method for setting communication between a leading vehicle and a guided vehicle of a train,
- wherein the vehicles use a bus-based communication system (WTB) in order to communicate internally with one another,
- wherein the leading vehicle provides a first implementation (WTB-CD) of the communication system for execution,
- wherein the guided vehicle provides, in addition to the first implementation (WTB-CD), a second implementation (WTB-ÖBB) of the communication system for execution,
- wherein the leading vehicle is used to select one of the two implementations (WTB-CD, WTB-ÖBB), which is to be used for communication during the operation of the train,
- wherein the leading vehicle uses an identifier representing the selected implementation (WTB-CD) for the selected implementation (WTB-CD),
- wherein the leading vehicle transmits the identifier to the guided vehicle via the bus-based communication system (WTB),
- wherein a predefined location (OKT 91) in a predefined telegram (R1) is used to transmit the identifier, the location (OKT 91) in the telegram (R1) being part of the first implementation (WTB-CD) and the second implementation (WTB-ÖBB),
- wherein the guided vehicle receives the identifier, takes it as a basis for automatically configuring itself for the selected implementation (WTB-CD) and subsequently uses this implementation for the internal train communication,
- wherein the first implementation used is the WTB-CD implementation and the second implementation used is the WTB-ÖBB implementation, these two implementations (WTB-CD, WTB-ÖBB) not being compatible with one another.

2. Method according to Claim 1, wherein the telegram used is a telegram that is intended for unidirectional transmission from the leading vehicle to the guided vehicle.

3. Method according to Claim 2, wherein the identifier is transmitted in octet 91 of an R1 telegram of the WTB-ÖBB implementation or the WTB-CD implementation.

4. Method according to one of the preceding claims, wherein the identifier used is an operator identifier, in particular a value of 54 for WTB-CD and a value of 81 for WTB-ÖBB.

## Revendications

1. Procédé pour établir une communication entre un véhicule de tête et un véhicule guidé d'un train,
- dans lequel les véhicules utilisent un système de communication par bus (WTB) pour communiquer entre eux au sein du train,
- dans lequel le véhicule de tête met à disposition une première implémentation (WTB-CD) du système de communication pour exécution,
- dans lequel le véhicule guidé met à disposition, en plus de la première implémentation (WTB-CD), une deuxième implémentation (WTB-ÖBB) du système de communication pour exécution,
- dans lequel le véhicule de tête sélectionne l'une des deux implémentations (WTB-CD, WTB-ÖBB) qui doit être utilisée pour la communication lors de la circulation du train,
- dans lequel le véhicule de tête utilise un identifiant qui représente l'implémentation sélectionnée (WTB-CD) pour l'implémentation sélectionnée (WTB-CD),
- dans lequel le véhicule de tête transmet l'identifiant au véhicule guidé via le système de communication basé par bus (WTB),
- dans lequel une position prédéfinie (OKT 91) d'un télégramme (R1) prédéfini est utilisée pour transmettre l'identifiant, la position (OKT 91) dans le télégramme (R1) faisant partie de la première implémentation (WTB-CD) et de la deuxième implémentation (WTB-ÖBB),
- dans lequel le véhicule guidé reçoit l'identifiant, se configure automatiquement sur base de celui-ci pour l'implémentation (WTB-CD) sélectionnée et utilise ensuite cette implémentation pour la communication interne au train,
- dans lequel l'implémentation WTB-CD est utilisée comme première implémentation et l'implémentation WTB-ÖBB est utilisée comme deuxième implémentation, ces deux implémentations (WTB-CD, WTB-ÖBB) n'étant pas compatibles entre elles.

2. Procédé selon la revendication 1, dans lequel le télégramme utilisé est un télégramme destiné à une transmission unidirectionnelle du véhicule de tête au véhicule guidé.

3. Procédé selon la revendication 2, dans lequel l'identifiant est transmis dans l'octet 91 d'un télégramme R1 de l'implémentation WTB-ÖBB ou de l'implémentation WTB-CD.

4. Procédé selon l'une des revendications précédentes, dans lequel on utilise comme identifiant un identificateur d'opérateur, en particulier une valeur de 54 pour WTB-CD et une valeur de 81 pour WTB-ÖBB.
